# EUROPÄISCHE PATENTSCHRIFT

(11) **EP 2 648 100 B1**
(45) Veröffentlichungstag und Bekanntmachung des Hinweises auf die Patenterteilung: **09.08.2017**
(21) Anmeldenummer: 12173752.2
(22) Anmeldetag: 27.06.2012
(51) Int. Cl.: G06F 11/18, G06F 11/20, G06F 11/07

(54) **Automatisierungsgerät mit Vorrichtungen zur Prozessorüberwachung**
Automation device with devices for processor monitoring
Appareil d'automatisation doté de dispositifs de surveillance de processeurs

(30) Priorität: 03.04.2012 DE 102012205445
(43) Veröffentlichungstag der Anmeldung: 09.10.2013
(73) Patentinhaber: Siemens Aktiengesellschaft, 80333 München (DE)
(72) Erfinder: Metzler, Matthias, 76229 Karlsruhe (DE)

(56) Entgegenhaltungen:
- US-A1- 2010 235 558
- US-B1- 6 675 320

## Beschreibung

Die Erfindung betrifft ein Automatisierungsgerät zur Steuerung und/oder Überwachung eines technischen Prozesses und speziell ein solches Automatisierungsgerät mit zumindest zwei Prozessoren, wobei jedem Prozessor eine Prozessorüberwachungsvorrichtung zugeordnet ist.

Automatisierungsgeräte mit redundanten Funktionseinheiten, zum Beispiel redundanten Prozessoren, sind an sich bekannt. Im Hinblick auf die weitere Verwendung des Begriffs Automatisierungsgerät umfasst dieser sämtliche Geräte, Einrichtungen oder Systeme, also neben z.B. Steuerungen, wie speicherprogrammierbaren Steuerungen, numerischen Steuerungen (NC-Steuerungen), Prozessrechnern, (Industrie-)Computern, dezentralen Peripheriegeräten, Bedien- und Beobachtungsgeräten und dergleichen auch Antriebs- oder sonstige Aggregatsteuerungen, Frequenzumrichter und Ähnliches, wie sie zur Steuerung, Regelung und/oder Überwachung technologischer Prozesse zum Beispiel zum Umformen oder Transportieren von Material, Energie oder Information etc. eingesetzt werden oder einsetzbar sind, wobei insbesondere über geeignete technische Einrichtungen, wie zum Beispiel Sensoren oder Aktoren, Energie aufgewandt oder gewandelt wird.

Automatisierungsgeräte mit Mikroprozessoren der oben genannten Art oder Funktionseinheiten, wie sie zum Beispiel auch in solchen Automatisierungsgeräten verwendet werden, unterliegen mit der immer weiter fortschreitenden Miniaturisierung der Fertigungsprozesse der Halbleiter-Bauelemente (Prozessoren, Controller, Speicher, usw.) einer zunehmenden Fehleranfälligkeit sowie einer begrenzten Lebensdauer. Automatisierungsgeräte der eingangs genannten Art, aber auch davon umfasste Funktionseinheiten sowie durch Kombination solcher Automatisierungsgeräte und/oder Funktionseinheiten gebildete Systeme werden im Folgenden im Hinblick auf eine bessere Lesbarkeit der nachfolgenden Beschreibung, aber ohne Verzicht auf eine weitergehende Allgemeingültigkeit, zusammenfassend als Automatisierungsgeräte bezeichnet.

Wegen der immer geringer werdenden verwendeten oder benötigten Energiemengen während der Speicherung und Verarbeitung von Daten durch solche Automatisierungsgeräte spielen auch sogenannte weiche Fehler (Soft-Error) eine immer größere Rolle: Daten können in Speichern und auch in Registern, in Rechenwerken und beim Transfer während der Datenverarbeitung verfälscht werden. Dabei können nicht nur die jeweiligen Daten, sondern auch darauf basierende (An-)Steuer-Informationen und damit ganze Abläufe verfälscht werden.

Bei der Betrachtung einer in der Fachterminologie als MTTF (Mean Time To Failure) bezeichneten Ausfallrate eines Automatisierungsgeräts sind zum einen eine Ausfallrate der verbauten elektronischen Komponenten, also insbesondere der jeweiligen Halbleiter-Bauelemente, und zum anderen eine Soft-Error-Rate (SER) relevant.

Insgesamt wird eine Verfügbarkeit eines Automatisierungsgeräts einerseits durch die Ausfallrate der jeweiligen Hardware und eventuelle Fehler der auf dem Automatisierungsgerät zum Ablauf kommenden Software (Firmware, Betriebssystem) bestimmt, denn auch die Software weist typischerweise Fehler auf.

Eine geringere Ausfallrate kann z.B. dadurch erreicht werden, dass nur besonders geprüfte und/oder zertifizierte Bauelemente, gegebenenfalls sogenannte gehärtete Bauelemente, verwendet werden, die Produktion genau kontrolliert wird und/oder das jeweilige Automatisierungsgerät im Anschluss an die Produktion und/oder nochmals am Einsatzort sehr ausführlich geprüft wird. Softwarefehler können reduziert werden, indem die Software unter Verwendung von entsprechenden Prozessen und Werkzeugen entwickelt und besonders intensiv getestet wird. Dennoch kann die Fehlerfreiheit eines Automatisierungsgeräts nicht mit letzter Konsequenz gewährleistet werden. Zudem führen die oben beschriebenen Maßnahmen zu einer nicht unerheblichen Verteuerung des Automatisierungsgeräts.

Besonders hohe Anforderungen im Hinblick auf deren Verfügbarkeit werden an Automatisierungsgeräte gestellt, die in sogenannten hochverfügbaren und oder fehlersicheren Anwendungen zum Einsatz kommen. Die Verfügbarkeit lässt sich dabei in einem gewissen Umfang durch eine erhöhte Fehlertoleranz verbessern. Es werden also Fehler abhängig von einer jeweiligen Fehlerart und einem jeweiligen Fehlerort als relevant oder irrelevant eingestuft und die Verfügbarkeit wird nur oder im Wesentlichen nur durch eventuelle relevante Fehler bestimmt.

In fehlersicheren Systemen wird dabei primär Wert darauf gelegt, dass beliebige Fehler, also relevante und irrelevante Fehler, erkannt werden und das System in einem Fehlerfall in einen sicheren Zustand übergeht, also zum Beispiel einen Abschaltprozess einleitet. Dabei darf die Verfügbarkeit aber nie außer Acht gelassen werden, denn sonst ist das System zwar sicher, aber nicht wirtschaftlich vernünftig betreibbar, weil es so gut wie nie verfügbar ist.

Die Verfügbarkeit ist daher eine wichtige Eigenschaft eines Automatisierungsgeräts und je nach Anforderung auch die Fehlersicherheit. Die Verfügbarkeit des jeweiligen Automatisierungsgeräts wird dabei durch vorhersehbare, aber nicht vermeidbare und nicht vorhersehbare Fehler bestimmt. Eine vor allem zeitnahe Erkennung, insbesondere eine zeitnahe Erkennung und Lokalisierung von Fehlern sowie eine entsprechende Reaktion auf erkannte Fehler sind also eine grundlegende Notwendigkeit.

Im Hinblick auf diese Problematik sind unterschiedliche Lösungsansätze bekannt:

Zur Erkennung von Fehlern und gegebenenfalls auch zur Lokalisierung von Fehlern sind Automatisierungsgeräte bekannt, bei denen die jeweilige Hardware (Prozessoren, Controller, Speicher, usw.) im Hintergrund laufend getestet wird sowie Speicherinhalte im Hintergrund und vor und/oder bei Verwendung auf Authentizität und Konsistenz geprüft werden, usw. In Automatisierungsgeräten, insbesondere Automatisierungsgeräten in Form von Zentraleinheiten speicherprogrammierbarer Steuerungen oder in Form von Zentraleinheiten von numerischen Steuerungen oder dergleichen mit mehreren Prozessoren/Controllern wird dabei auch häufig der eine Prozessor durch den anderen überwacht und/oder es werden sogenannte Watchdogs verwendet. Jede derartige Überwachung sollte wiederum selbst überwacht werden, um auch die Ausfallrate / Fehlerrate der Überwachung zu berücksichtigen, speziell wenn die Überwachung durch einen Prozessor erfolgt, der im Allgemeinen eine insgesamt eher höhere Ausfallrate hat.

Watchdogs und deren Verwendung sind im Stand der Technik vielfach belegt. Zum Beispiel zeigt die US 6,675,320 B1 ein System mit zwei von Peripheriebausteinen umfassten Watchdogs und ein Verfahren zu deren Synchronisation. Die US 2010/0235558 A1 zeigt ein Multiprozessorsystem, bei dem jedem Prozessor ein eigener Watchdog zugeordnet ist und bei dem ein von einem Watchdog in einer Fehlersituation generiertes Timeoutsignal allen Prozessoren zugeführt wird.

Eine Ausführung eines Automatisierungsgeräts mit zum Beispiel zwei Prozessoren ist zur Steigerung der Verfügbarkeit des Automatisierungsgeräts vorgesehen und an sich als Redundanz bekannt. Dabei werden das Automatisierungsgerät oder Teile des Automatisierungsgeräts in gleicher Weise mehrfach ausgeführt und in geeigneter Art und Weise miteinander durch eine kommunikative Verbindung gekoppelt. Bekannt ist insoweit, Stromversorgungen, Speicher und dergleichen, aber auch die jeweiligen Prozessoren oder Controller redundant auszuführen. Wird ein Fehler in einem Teil des so gebildeten Systems festgestellt, schaltet das System bei Bedarf auf den redundanten Teil um und der jeweils durch das Automatisierungsgerät gesteuerte und/oder überwachte Prozess kann ohne Ausfall weiter betrieben werden. Der Betreiber des Automatisierungsgeräts tauscht anschließend die defekte Komponente aus und nimmt das Automatisierungsgerät wieder in Betrieb, so dass die Redundanz wieder hergestellt ist.

Bei einem redundanten Betrieb zweier Zentraleinheiten einer speicherprogrammierbaren Steuerung der Anmelderin kommunizieren diese über eine entsprechende Kommunikationsschnittstelle mit speziellen Schnittstellen-Controllern. Neben der Redundanz der Zentraleinheiten sind häufig in jeder Zentraleinheit auch noch solche Schnittstellen-Controller redundant ausgeführt, um die Verfügbarkeit der Kopplung der Zentraleinheiten und damit die Verfügbarkeit des Gesamtsystems zu steigern. Dann kann nämlich einer der Schnittstellen-Controller ausfallen und trotzdem kann über den redundanten Schnittstellen-Controller zum Beispiel ein Ankoppeln und Aufdaten (AuA) mit einer Umschaltung von einer ersten Zentraleinheit zur redundanten Zentraleinheit - zum Beispiel zur Reparatur - erfolgen.

Genauso wichtig wie die Erkennung eines Fehlers ist die Lokalisierung des erkannten Fehlers. Nur so kann gezielt der als fehlerhaft erkannte Teil des Systems abgeschaltet werden. In redundant aufgebauten Systemen können Fehler auch dadurch erkannt werden, dass Daten des Systems (laufend, vor einer Weiterverarbeitung, vor einer Ausgabe an den Prozess, usw.) zwischen den redundanten Teilen des Systems verglichen werden. Ein solcher Vergleich kann besonders dann durchgeführt werden, wenn eine Synchronisation der redundanten Systeme erfolgt. Im Falle von Unterschieden liegt offensichtlich ein Fehler vor und es wird nach bestimmten Algorithmen ein Teil des Systems, also zum Beispiel eine Zentraleinheit, oder die ganze Anlage zum Beispiel abgeschaltet oder in einen sicheren Zustand überführt. Eine sichere Lokalisierung des ursächlichen Fehlers, die für eine hochwertige Entscheidung zur Abschaltung des richtigen Teils des Systems notwendig ist, ist aber im einfachen Fall der 1v2-Redundanz mit zum Beispiel zwei Zentraleinheiten, einer Zentraleinheit mit zwei Prozessoren oder zwei redundanten Schnittstellen-Controllern nicht möglich (50:50-Problem). Bei einer mit einer 1v2-CPU-Redundanz aufgebauten Zentraleinheit mit also zwei redundanten Prozessoren, von denen einer als Master-CPU und der andere entsprechend als Reserve-CPU fungiert, kann es vorkommen, dass bei einem Datenvergleich, insbesondere während der Synchronisation, ein Fehler festgestellt wird und einer der Prozessoren abgekoppelt wird. Nach einer Weile erkennt wiederum der noch laufende Prozessor, der dann als Master-CPU im Solo-Betrieb fungiert, in Folge des schon erkannten Vergleichsfehlers oder unabhängig davon, aber auf Grund desselben Defekts, einen Fehler. Wenn daraufhin auch der verbliebene Prozessor abgeschaltet wird, führt die Redundanz offensichtlich zu keiner Erhöhung der Verfügbarkeit, zumindest zu keiner relevanten Erhöhung der Verfügbarkeit. Erst eine 2v3-Redundanz erlaubt eine Mehrheitsentscheidung (Voting, Gewichtung) und damit eine Zuordnung oder Lokalisierung des jeweiligen Fehlers während des Vergleichs.

Redundanz als alleinige Maßnahme nutzt demnach wenig zur effektiven Steigerung der Verfügbarkeit. Es ist vielmehr wichtig, Fehler so früh wie möglich zu erkennen und zu lokalisieren, bevor sie sich auf den jeweils gesteuerten Prozess auswirken können und gegebenenfalls das gesamte redundante System zur Abschaltung bringen. Eine implementierte Fehlererkennung oder Fehlerüberwachung muss entsprechend etwaige Fehler möglichst schnell erkennen und lokalisieren, um vor einem potentiellen Vergleichsfehler oder spätestens im Moment eines Vergleichsfehlers die korrekte Entscheidung im Hinblick auf die Abschaltung eines Teilsystems treffen zu können. Eine Verschleppung des jeweiligen Fehlers wird dann vermieden und Fehler können sich nicht auf den Prozess auswirken und gegebenenfalls das gesamte redundante System zur Abschaltung bringen. Weil aber während einer Synchronisation der redundanten Teilsysteme, während derer sich solche Vergleichsfehler ergeben können, für eine Entscheidung hinsichtlich des Fehlerorts nur eine vergleichsweise kurze Zeitspanne zur Verfügung steht, normalerweise eine Zeitspanne im Bereich von einigen Millisekunden bis maximal wenigen 10ms, sind Hintergrundtests und einfache Watchdog-Mechanismen nicht verwendbar, weil sie zu umfangreich bzw. unwirksam sind.

Ein Bestandteil der Fehlererkennung in Zentraleinheiten eines besonderen Typs (S7-400) einer speicherprogrammierbaren Steuerung der Anmelderin ist eine gegenseitige Überwachung der zumindest zwei Prozessoren dieser Zentraleinheiten, bei der sich jeder Prozessor in bestimmten Abständen bei dem oder jedem redundanten Prozessor meldet. Diese Funktionalität ist Bestandteil der Firmware dieser Zentraleinheiten und beinhaltet eine Meldung vorbestimmter Art an den oder jeden redundanten Prozessor, wobei die zeitlichen Abstände zwischen solchen Meldungen natürlich kleiner als die bei der Synchronisation zur Verfügung stehende Zeit sein müssen, um Wirkung zeigen zu können. Auf Seiten des oder jedes redundanten Prozessors wird durch die Firmware der rechtzeitige und korrekte Eingang solcher Meldungen überwacht. Innerhalb eines Systems mit derartigen, redundanten Prozessoren kostet einerseits das Absenden solcher Meldungen und andererseits das Prüfen eingehender Meldungen Zeit und Rechenleistung, wobei der Ressourcenbedarf umso höher ist, je hochwertiger der Mechanismus (Häufigkeit, Qualität des Algorithmus) angelegt ist.

Wird ein Fehler erkannt, meldet der betroffene Prozessor (CPU) dem oder jedem redundanten Prozessor (Partner-CPU), dass dieser den von dem Automatisierungsgerät mit einer solchen Zentraleinheit gesteuerten und/oder überwachten Prozess allein weiterführen muss bzw. müssen. Bei einer 1v2-CPU-Redundanz fungiert danach der verbleibende Prozessor als Master im Solo-Betrieb. Eine solche aktive Meldung an die Partner-CPU ist wichtig, da die Partner-CPU sonst nicht eindeutig den Ausfall anderer Prozessoren erkennen und so den Prozess weiterführen kann.

Dabei ist zu berücksichtigen, dass der Ausfall eines Prozessors zwar zwangsläufig zum Ausfall der Kommunikation mit der Partner-CPU führt, dies jedoch allein noch kein hinreichendes Kriterium für einen redundanten Prozessor sein kann, selbst Master zu werden bzw. den Prozess allein zu führen. Wenn nämlich nur die Kommunikation von dem Fehler betroffen ist, könnten ansonsten beide redundanten Prozessoren den Kommunikationsausfall erkennen, wobei der bisher als Master fungierende Prozessor seine Funktion als Master beibehält und der redundante Prozessor ebenfalls versucht, die Funktion als Master zu übernehmen. Eine solche Situation mit zwei als Master fungierenden Prozessoren muss aber ebenso wie ein Totalausfall vermieden werden.

Die Herausforderung besteht demnach darin, dass ein Prozessor möglichst eindeutig erkennen können muss, ob er den jeweiligen Prozess allein weiterführen muss.

Zudem besteht ein Nachteil einer bekannten und üblicherweise in Firmware implementierten derartigen Kommunikation zwischen redundanten Prozessoren darin, dass eine durch Firmware gesteuerte Meldung an eine Partner-CPU in vielen Fällen nicht abgesetzt werden kann, wenn der zugrunde liegende Fehler dies direkt oder indirekt verhindert, etwa bei einem Defekt eines Busses oder einer Schnittstelle, bei überschriebenen Daten / Programm-Strukturen, bei einer gegenseitigen dynamischen Beeinflussung, usw. oder wegen eines Doppelfehlers.

Häufig wird daher zur Überwachung ein hardware-basierter sogenannter Watchdog verwendet, wie er in einzelnen Prozessoren/Controllern bereits integriert ist oder wie er diskret realisiert werden kann. Integrierte Watchdogs sind aber im Allgemeinen ungeeignet, da sie im Fehlerfall häufig einen Reset des Prozessors/Controllers auslösen und damit den Prozessor/Controller abschalten. Eine eindeutige Information an den redundanten Prozessor, nämlich dass dieser Master bleiben oder werden soll, kann so nicht erfolgen. Gegen integrierte Watchdogs spricht zudem, dass diese für sicherheitsrelevante Anwendungen dann nicht verwendet werden können, wenn der Takt des integrierten Watchdogs vom Takt des zu überwachenden Prozessors abhängig ist. Dies ist bei integrierten Watchdogs üblich. Darüber hinaus haben integrierte Watchdogs im Allgemeinen eine eher zu lange Wartezeit (größer als einige 10ms), um für eine Entscheidungsfindung innerhalb der bei einer Synchronisation zur Verfügung stehenden Zeit sinnvoll verwendet werden zu können.

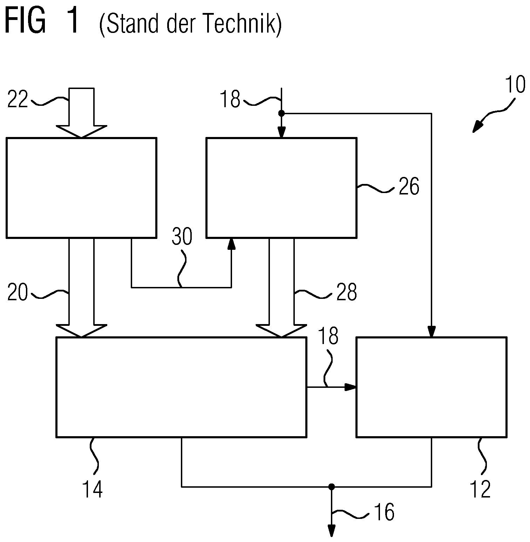

FIG 1 zeigt dazu beispielhaft einen zur Überwachung beispielsweise eines Prozessors einer Zentraleinheit einer speicherprogrammierbaren Steuerung verwendeten Watchdog. Die Überwachung verwendet ein bekanntes Verfahren, bei dem der zu überwachende Prozessor in regelmäßigen Abständen mit einem gleichsam als Schlüssel fungierenden Datum auf eine Überwachungseinheit zugreift und diese dadurch triggert. Das jeweils verwendete Datum wird nach einem speziellen Algorithmus generiert und wechselt zum Beispiel bei jedem Zugriff. Dieser Algorithmus ist in der Firm- oder Hardware der Überwachungseinheit und in der Soft- oder Firmware des zu überwachenden Prozessors entsprechend abgebildet. Läuft eine vorgegebene Zeit ohne ein Triggerereignis ab oder passt der Schlüssel nicht, wird ein Fehler signalisiert. Immer dann, wenn der Schlüssel rechtzeitig gesendet und akzeptiert wird, wird ein Timer zurückgesetzt und ein neuer Schlüssel berechnet, usw. Eine solche Überwachungseinheit umfasst einen Vergleicher, einen Timer, einen Schlüsselgenerator und eine Schnittstelle (Interface). Die Schnittstelle erlaubt und signalisiert einen Zugriff an die anderen Funktionseinheiten und Timer oder Vergleicher können einen eventuellen Fehler signalisieren.

Die Aufgabe der vorliegenden Erfindung besteht darin, ein Automatisierungsgerät mit verbesserter Verfügbarkeit, zumindest verbesserten Möglichkeiten zur Fehlererkennung und/oder Fehlerlokalisierung, anzugeben.

Diese Aufgabe wird mit einem Automatisierungsgerät mit den Merkmalen des Anspruchs 1 gelöst. Dazu ist bei einem Automatisierungsgerät mit zumindest zwei insbesondere redundanten Prozessoren, wobei jedem Prozessor eine Prozessorüberwachungsvorrichtung wie hier und nachfolgend beschrieben zugeordnet ist, vorgesehen, dass durch jeden Prozessor der ihm jeweils zugeordneten Prozessorüberwachungsvorrichtung ein Triggersignal übermittelbar ist und im Betrieb übermittelt wird und dass das Triggersignal innerhalb jeder Prozessorüberwachungsvorrichtung konfigurierbar genau einer der von der Prozessorüberwachungsvorrichtung umfassten Überwachungseinheiten zur Triggerung des Zeitgebers der jeweiligen Prozessorüberwachungsvorrichtung zuleitbar ist und im Betrieb der Prozessorüberwachungsvorrichtung zugeleitet wird.

Diejenige Vorrichtung zur Prozessorüberwachung (Prozessorüberwachungsvorrichtung), der der Prozessor direkt ein Triggersignal übermittelt, wird in Bezug auf diesen Prozessor als lokale Prozessorüberwachungsvorrichtung oder lokale Prozessorüberwachung verstanden. Dadurch, dass das Triggersignal konfigurierbar genau einer der von der jeweils lokalen Prozessorüberwachungsvorrichtung umfassten zumindest zwei Überwachungseinheiten zuführbar ist bzw. zugeführt wird, erfolgt eine Auswahl der für einen Prozessor innerhalb der jeweils lokalen Prozessorüberwachungsvorrichtung gewissermaßen zuständigen Überwachungseinheit. Eine solche Auswahl erfolgt durch entsprechende Konfiguration auch für die oder jede weitere Prozessorüberwachungsvorrichtung. Eine oder mehrere weitere Prozessorüberwachungsvorrichtungen sind zur Unterscheidung von der jeweils einen lokalen Prozessorüberwachungsvorrichtung als entfernte Prozessorüberwachungsvorrichtung(en) u verstehen. Das Ergebnis sind zumindest zwei redundante Prozessorüberwachungsvorrichtungen mit jeweils zumindest zwei redundanten Überwachungseinheiten, von denen jeweils eine für genau einen der mindestens zwei Prozessoren zuständig ist.

Einer der Vorteile der Erfindung besteht darin, dass über die Kopplungseinheit zwei oder mehr Vorrichtungen zur Prozessorüberwachung zusammengeschlossen werden können. Es findet dann nicht nur jeweils eine isolierte Überwachung einzelner Prozessoren, sondern eine Überwachung aller über die mittels der Kopplungseinheiten kommunikativ zusammengeschalteten Prozessorüberwachungsvorrichtungen zusammengefassten Prozessoren statt. Jeder Prozessor erhält dabei Informationen darüber, ob bei einem anderen Prozessor eine Fehlersituation vorliegt. Es kann also genau erkannt werden, wann zum Beispiel in einem Automatisierungsgerät mit zumindest zwei redundanten Prozessoren ein Prozessor, der bisher als Reserve-CPU betrieben wurde, die Funktion als Master-CPU übernehmen muss und dergleichen.

Vorteilhafte Ausgestaltungen der Erfindung sind Gegenstand der Unteransprüche.

Bei einer Ausführungsform der Prozessorüberwachungsvorrichtung umfasst die Kopplungseinheit einen Sender und einen Empfänger, wobei über den Sender ein von der Prozessorüberwachungsvorrichtung empfangenes Triggersignal an eine weitere Vorrichtung zur Prozessorüberwachung weiterleitbar ist und im Betrieb weitergeleitet wird und wobei über den Empfänger ein von einer weiteren Vorrichtung zur Prozessorüberwachung empfangenes Triggersignal an jede Überwachungseinheit der Prozessorüberwachungsvorrichtung weiterleitbar ist und im Betrieb weitergeleitet wird. Auf diese Weise lassen sich mehrere Vorrichtungen zur Prozessorüberwachung auf einfache Art und Weise kombinieren und ein von einer ersten Prozessorüberwachungsvorrichtung empfangenes Triggersignal kann der oder jeder weiteren Prozessorüberwachungsvorrichtung verfügbar gemacht werden, genauso wie umgekehrt ein dort empfangenes Triggersignal.

Bei einer besonderen Ausführungsform der Prozessorüberwachungsvorrichtung weist diese eine Schnittstelleneinheit mit zumindest einem ersten und einem zweiten Interface zur Entgegennahme des Triggersignals oder zum Empfang des Triggersignals gemäß einer zur Übertragung von Daten über einen Bus vereinbarten Konvention sowie zur Verarbeitung des Triggersignals und einem konfigurierbaren Multiplexer auf. Der konfigurierbare Multiplexer ist dafür eingerichtet, dass er entsprechend einer jeweiligen Konfiguration nur ein entweder vom ersten oder vom zweiten Interface erhaltenes Triggersignal zur Triggerung des Zeitgebers weiterleitet. Zum einen wird damit sichergestellt, dass in einer Prozessorüberwachungsvorrichtung jeweils nur genau ein Triggersignal verarbeitet wird. Zum anderen ist erkennbar, wenn zum Beispiel ein nicht erwartetes Triggersignal, also ein Triggersignal vom "falschen" Prozessor, eingeht.

Wenn die Prozessorüberwachungsvorrichtung eine Signalisierungseinrichtung umfasst, kann dieser eine Mehrzahl innerhalb der Prozessorüberwachungsvorrichtung generierbarer Fehlersignale zugeführt werden und es kann durch die Signalisierungseinheit anhand der Fehlersignale ein Fehlerstatus und/oder ein Summenfehler generiert werden. Dann kann auf etwaige, durch ein entsprechendes Fehlersignal angezeigte Fehler reagiert werden, wobei der Summenfehler eine Mehrzahl unterschiedlicher Fehlersignale, auf die in gleicher oder ähnlicher Art und Weise reagiert werden muss, zusammenfasst. Anhand des Fehlerstatus bleibt jeweils erkennbar, welches Fehlersignal oder welche Fehlersignale vorgelegen haben, so dass der oder jeder zugrunde liegende Fehler erkennbar und in weitem Umfang auch lokalisierbar ist.

Bei einem Automatisierungsgerät, bei dem durch jeden Prozessor der ihm jeweils zugeordneten, lokalen Prozessorüberwachungsvorrichtung ein Triggersignal übermittelbar ist, ist bei einer Ausführungsform vorgesehen, dass das Triggersignal innerhalb der jeweils lokalen Prozessorüberwachungsvorrichtung dem dortigen Sender der Kopplungseinheit zuleitbar ist und im Betrieb weitergeleitet wird. Von dort kann das Triggersignal an zumindest eine entfernte Prozessorüberwachungsvorrichtung weitergeleitet werden.

Bei einer weiteren Ausführungsform des Automatisierungsgeräts ist ein dem Sender einer der zumindest zwei Prozessorüberwachungsvorrichtungen zugeleitetes Triggersignal durch einen Empfänger einer anderen der zumindest zwei Prozessorüberwachungsvorrichtungen empfangbar und durch diesen konfigurierbar an genau eine der von dieser Prozessorüberwachungsvorrichtung umfassten Überwachungseinheiten zur Triggerung des Zeitgebers weiterleitbar. Die in Bezug auf die jeweils lokale Prozessorüberwachungsvorrichtung bereits beschriebene Möglichkeit zur konfigurierbaren Auswahl jeweils genau einer der mindestens zwei Überwachungseinheiten besteht damit in korrespondierender Weise auch auf Seiten der oder jeder entfernten Prozessorüberwachungsvorrichtung. Bei zum Beispiel genau zwei Prozessoren und genau zwei Prozessorüberwachungsvorrichtungen lassen sich diese damit verschränkt zusammenschalten, indem über die jeweiligen Koppeleinheiten eine entsprechende kommunikative Verbindung hergestellt wird. Durch die konfigurierbare Auswahl zur Weiterleitung des Triggersignals an jeweils genau eine der jeweils mindestens zwei Überwachungseinheiten wird bewirkt, dass in der lokalen und der entfernten Prozessorüberwachungsvorrichtung jeweils genau eine Überwachungseinheit für einen der zwei Prozessoren (erster Prozessor) zuständig ist. Diejenigen Überwachungseinheiten, die in beiden Prozessorüberwachungsvorrichtungen nicht für den ersten Prozessor zuständig sind, stehen für den verbleibenden Prozessor (zweiter Prozessor) zur Verfügung.

Bei einer besonderen Ausführungsform des Automatisierungsgeräts umfasst zumindest eine der mindestens zwei Prozessorüberwachungsvorrichtungen eine Signalisierungseinheit (optional umfasst jede Prozessorüberwachungsvorrichtung eine solche Signalisierungseinheit), wobei der Signalisierungseinheit eine Mehrzahl innerhalb der jeweiligen Prozessorüberwachungsvorrichtung generierbarer Fehlersignale zuführbar ist und wobei durch die Signalisierungseinheit anhand der Fehlersignale ein durch das Automatisierungsgerät auswertbarer Summenfehler generierbar ist. Die Auswertung des jeweils resultierenden Summenfehlers durch das Automatisierungsgerät umfasst eine Auswertung für das Automatisierungsgerät insgesamt oder für jeden davon umfassten Prozessor individuell. Der Summenfehler kann demnach zum Beispiel dazu führen, dass einer der Prozessoren zurückgesetzt wird, dass vor dem Zurücksetzen für Diagnosezwecke oder dergleichen Statusinformationen, etwa ein Speicherabzug, gesichert werden, dass eine Umschaltung erfolgt, die bewirkt, dass ein bisher als Reserve-CPU fungierender Prozessor die Funktion als Master-CPU übernimmt oder dass das Automatisierungsgerät in einen Betriebszustand versetzt wird, der einen sicheren Zustand des Automatisierungsgeräts und/oder des jeweils gesteuerten und/oder überwachten Prozesses zum Ziel hat und so weiter.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Ganz allgemein gilt es zu bemerken, dass die Erfindung, die hier und im Folgenden auf der Ebene eines Geräts mit jeweils zumindest zwei Prozessoren beschrieben wird, genauso auch für redundante Geräte in Betracht kommt. Als Beispiel für ein Gerät, insbesondere ein Automatisierungsgerät mit mindestens zwei Prozessoren, wird hier und im Folgenden üblicherweise auf eine sogenannte Zentraleinheit einer speicherprogrammierbaren Steuerung Bezug genommen. Genauso kommt eine entsprechende Zentraleinheit einer numerischen Steuerung oder dergleichen in Betracht. Gleiches gilt für Geräte oder Module mit mehreren, insbesondere redundanten Controllern, zum Beispiel Schnittstellencontrollern, Buscontrollern oder dergleichen. Die Verwendung des Begriffs Zentraleinheit ist also in diesem Sinne nicht einschränkend auszulegen und der Begriff Zentraleinheit wurde ohne Verzicht auf eine weitergehende Allgemeingültigkeit nur im Hinblick auf eine bessere Verständlichkeit der Beschreibung gewählt. Genauso wie innerhalb solcher Geräte mehrere Prozessoren, Controller und dergleichen, insbesondere redundante Prozessoren, etc., nach dem hier vorgestellten Ansatz überwachbar sind, ist bei einem redundanten oder parallelen Betrieb auch eine Mehrzahl solcher Geräte überwachbar. Zum Beispiel ist bei üblicherweise modular ausgeführten Zentraleinheiten speicherprogrammierbarer Steuerungen eine erste Zentraleinheit redundant mit zumindest einer weiteren Zentraleinheit (zweite Zentraleinheit) betreibbar. Auch die beiden Zentraleinheiten können dann im Hinblick auf ihren redundanten Betrieb nach dem hier vorgestellten Ansatz überwacht werden. Dabei ist es unerheblich, ob die so überwachten Zentraleinheiten intern mehrere, insbesondere redundante Prozessoren aufweisen und diese möglicherweise auch schon selbst nach dem hier vorgestellten Ansatz überwacht werden. Der Begriff Automatisierungsgerät ist insofern zumindest so auszulegen, dass er zum einen zum Beispiel ein Automatisierungsgerät in Form einer Zentraleinheit einer speicherprogrammierbaren oder numerischen Steuerung und zum anderen ein Automatisierungsgerät mit zumindest einer ersten und einer zweiten derartigen Zentraleinheit erfasst. Der Begriff Prozessor ist dann zumindest auch so auszulegen, dass er auch Geräte mit einer eigenen Verarbeitungsfunktionalität umfasst, wie dies zum Beispiel bei einer Zentraleinheit der Fall ist.

Es zeigen
- FIG 1: eine im Stand der Technik bekannte Überwachungseinheit für einen Prozessor mit einer WatchdogFunktionalität,
- FIG 2: eine erweiterte Überwachungseinheit, die Triggersignale von zumindest zwei Quellen verarbeiten kann,
- FIG 3: eine Schnittstelleneinheit der erweiterten Überwachungseinheit gemäß FIG 2,
- FIG 4: ein aus einer Mehrzahl - hier zwei - von Überwachungseinheiten gemäß FIG 2 gebildetes Überwachungssystem,
- FIG 5: eine Vorrichtung zur Prozessorüberwachung (Prozessorüberwachungsvorrichtung oder kurz nur Prozessorüberwachung) mit einer Kopplungseinheit zum Zusammenschluss mit zumindest einer weiteren Prozessorüberwachungsvorrichtung,
- FIG 6: zwei verschränkt zusammengeschaltete Vorrichtungen zur Prozessorüberwachung mit den jeweils überwachten Prozessoren, wobei jeder Prozessor direkt nur an eine der mindestens zwei Vorrichtungen zur Prozessorüberwachung (lokale Prozessorüberwachungsvorrichtung) und indirekt über die Koppeleinheit der lokalen Prozessorüberwachungsvorrichtung an die mindestens eine weitere Prozessorüberwachungsvorrichtung (entfernte Prozessorüberwachungsvorrichtung) angeschlossen ist,
- FIG 7: eine Signalisierungseinheit als Ergänzung einer Vorrichtung zur Prozessorüberwachung,
- FIG 8: eine Vorrichtung zur Prozessorüberwachung gemäß FIG 5 mit einer Signalisierungseinheit gemäß FIG 7,
- FIG 9: ein Automatisierungsgerät mit einem ersten und einem zweiten Prozessor und einer ersten und einer zweiten Vorrichtung zur Prozessorüberwachung, wobei alle Einheiten über denselben Bus des Automatisierungsgeräts kommunikativ verbunden sind,
- FIG 10: ein Automatisierungsgerät gemäß FIG 9 mit einem ersten und einem zweiten Bus, wobei der erste Prozessor und die erste Vorrichtung zur Prozessorüberwachung über den ersten Bus und der zweite Prozessor und die zweite Vorrichtung zur Prozessorüberwachung über den zweiten Bus kommunikativ verbunden sind und wobei die beiden Vorrichtungen zur Prozessorüberwachung über deren Koppeleinheiten kommunikativ verbunden sind sowie
- FIG 11: weitere optionale Details in Bezug auf die Kopplungseinheit.

FIG 1 zeigt in schematisch vereinfachter Darstellung eine im Stand der Technik bekannte Überwachungseinheit 10 mit einer Timeout-Watchdog Funktionalität. Diese umfasst einen Zeitgeber (Timer) 12 und einen Vergleicher 14. Der Timer 12 ist üblicherweise in Form eines dekrementierenden Zählers implementiert, der gemäß einem jeweiligen Taktsignal von einem vorgegeben Startwert abwärts zählt. Sobald der Wert Null erreicht ist, spricht man davon, dass der Zähler abgelaufen ist (Timeout) und es wird ein Fehlersignal 16 generiert. Im Betrieb der Überwachungseinheit 10 wird der Timer 12 entweder aufgrund eines expliziten Reset-Signals 18 zurückgesetzt (und so dessen Ablauf verhindert) oder indem der Überwachungseinheit 10 ein passender Schlüssel 20 präsentiert wird. Der Schlüssel 20 wird der Überwachungseinheit 10 in regelmäßigen Abständen durch den zu überwachenden Prozessor (nicht gezeigt) über eine Schnittstelleneinheit 24 (Interface) zugeleitet. Die Schnittstelleneinheit 24 ist dabei für den Empfang eines Triggersignals 22 zuständig. Das Triggersignal 22 ist entweder unmittelbar der jeweilige Schlüssel 20 oder umfasst den jeweiligen Schlüssel 20, so dass die Schnittstelleneinheit 24 zumindest für die zweite Alternative die Implementation eines bestimmten Kommunikationsprotokolls umfasst und aus den als Triggersignal 22 erhaltenen Daten den Schlüssel 20 generiert oder extrahiert. Nach einer solchen Verarbeitung wird der Schlüssel 20 dem Vergleicher 14 zugeführt und auf Authentizität geprüft. Dafür umfasst die Überwachungseinheit 10 einen Schlüsselgenerator 26, der zur Generierung eines Referenzschlüssels 28 über denselben Algorithmus verfügt, mit dem der empfangene Schlüssel 20 generiert wurde. Die Generierung des Referenzschlüssels 28 wird zum Beispiel ausgelöst, indem die Schnittstelleneinheit 24 dem Schlüsselgenerator 26 den Erhalt von Daten mit einem Schlüssel 20 durch Absetzen eines Zugriffsignals 30 anzeigt. Der Vergleicher 14 vergleicht anschließend den empfangenen Schlüssel 20 mit dem intern durch den Schlüsselgenerator 26 erzeugten Referenzschlüssel 28. Wenn empfangener Schlüssel 20 und Referenzschlüssel 28 übereinstimmen, es sich also bei dem empfangenen Schlüssel 20 um einen passenden Schlüssel handelt, kann der Timer 12 zurückgesetzt werden (reset). Ansonsten wird ein Fehlersignal 16 generiert. Bei einem passenden Schlüssel 20 bewirkt das resultierende Zurücksetzen des Timers 12 eine Triggerung der Überwachungseinheit 10 und diese ist damit bis zum nächsten Erhalt eines Schlüssels 20 oder bis zum Ablauf des Timers 12 erneut gleichsam scharf geschaltet.

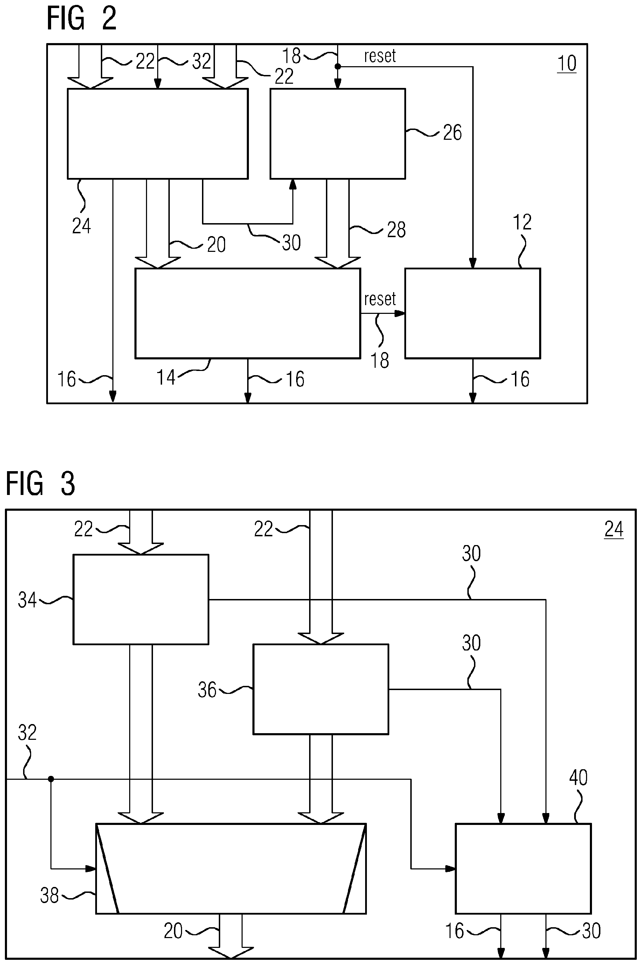

FIG 2 zeigt demgegenüber eine erweiterte Überwachungseinheit 10. Diese weist im Wesentlichen die schon anhand der Darstellung in FIG 1 beschriebenen Funktionseinheiten auf, so dass auf die dortige Beschreibung verwiesen werden kann. Die erweiterte Überwachungseinheit 10, die im Folgenden mitunter auch nur kurz als Überwachungseinheit 10 bezeichnet wird, unterscheidet sich von der Überwachungseinheit 10 in FIG 1 durch eine Schnittstelleneinheit 24, die einen Zugriff auf die Überwachungseinheit 10 aus mehreren Quellen (hier zwei Quellen) erlaubt. Als Quellen kommen dabei bei einer Zentraleinheit mit zum Beispiel zwei Prozessoren, insbesondere redundanten Prozessoren diese beiden Prozessoren in Betracht. Für jede Quelle fungiert die Schnittstelleneinheit 24 damit als ein der jeweiligen Quelle exklusiv zugeordnetes Interface.

Für die Schnittstelleneinheit 24 ist eine Konfigurationsmöglichkeit gegeben, so dass mit Konfigurationsdaten 32 vorgebbar ist, von welcher Quelle, d.h. über welches Interface, mittels der Schnittstelleneinheit 24 ein Zugriff auf die Überwachungseinheit 10 durchgeführt werden soll oder darf. Die Schnittstelleneinheit 24 ist darüber hinaus um eine Auswertungsfunktionalität ergänzt, die einen Zugriff aus der konfigurierten Quelle, d.h. über das konfigurierte Interface, als korrekt signalisiert und bei Zugriffen aus der nicht konfigurierten Quelle unabhängig von den jeweils übermittelten Daten und dem davon umfassten Schlüssel 20 einen Fehler signalisiert, indem ein entsprechendes Fehlersignal 16 generiert wird. Damit ist jeder Quelle exklusiv eine Überwachungseinheit 10 zugeordnet.

Zusätzlich zu dem in FIG 2 gezeigten Timer 12 kann die Überwachungseinheit 10 noch zumindest einen weiteren Timer umfassen. Dann überwacht der Timer 12 den Ablauf der als Timeout vorgegebenen Zeitspanne, wie oben beschrieben, während der weitere Timer eine minimale Zeitspanne vorgibt, vor deren Ablauf kein Triggerereignis eintreten darf. Dieser weitere Timer kann dann zum Beispiel als Minimum-Timer bezeichnet werden, während der auch bei Watchdogs im Stand der Technik (FIG 1) verwendete Timer 12 zur Unterscheidung als Maximum-Timer 12 bezeichnet würde. Wenn die Überwachungseinheit 10 einen Minimum-Timer umfasst, führt ein Triggerereignis vor Ablauf des Minimum-Timers genauso zu einem Fehlersignal 16 oder gegebenenfalls einem eigenen, separat auswertbaren Fehlersignal wie dies bei einem Ablauf des Maximum-Timers 12 der Fall wäre.

FIG 3 zeigt eine vergrößerte Darstellung der erweiterten Schnittstelleneinheit 24. Dabei wird deutlich, dass die erweiterte Schnittstelleneinheit 24 entsprechend der Anzahl zugelassener Quellen jeweils über ein eigenes Interface 34, 36 verfügt. Ein Multiplexer 38 oder dergleichen erlaubt entsprechend der Konfiguration 32 der Überwachungseinheit 10 die Weiterleitung eines über eines der beiden Interfaces 34, 36 erhaltenen Schlüssels 20. Eine Auswerteeinheit 40 überwacht den Erhalt eventueller Zugriffssignale 30 und erkennt anhand der auch der Auswerteeinheit 40 zur Verfügung gestellten Konfiguration 32, ob der Zugriff auf die Überwachungseinheit 10 und deren Schnittstelleneinheit 24 über das gemäß der Konfiguration vorgesehene Interface 34, 36 erfolgt. Im Fehlerfall wird ein Fehlersignal 16 generiert. Ansonsten wird das Zugriffssignal 30 auch extern verfügbar gemacht, damit beim Schlüsselgenerator 26 die Generierung eines Referenzschlüssels 28 veranlasst werden kann.

Insgesamt wird damit eine erhöhte Sensibilität erreicht, insofern als nur vollständig korrekt durchgeführte Zugriffe akzeptiert werden und Zugriffe, die nicht der Konfiguration entsprechen und damit in jedem Fall auf einen Fehler oder Fehlzugriff hinweisen, entsprechend gemeldet werden. Die einzelnen Fehlersignale 16 werden außerdem getrennt gehandhabt, so dass ein fehlerhafter Zugriff auf eine Überwachungseinheit 10, ein Fehler aufgrund eines fehlgeschlagenen Vergleichs von Schlüssel 20 und Referenzschlüssel 28 und ein Fehler aufgrund eines Ablaufs des Timers 12 unterscheidbar sind. Diese erweiterte Überwachungseinheit 10 ist nun für mehrere Prozessoren selektiv einsetzbar und ermöglicht aufgrund der in unterschiedlichen Funktionsabschnitten jeweils generierbaren Fehlersignale 16 eine gute Lokalisierbarkeit und gute Diagnosemöglichkeit eventueller Fehler.

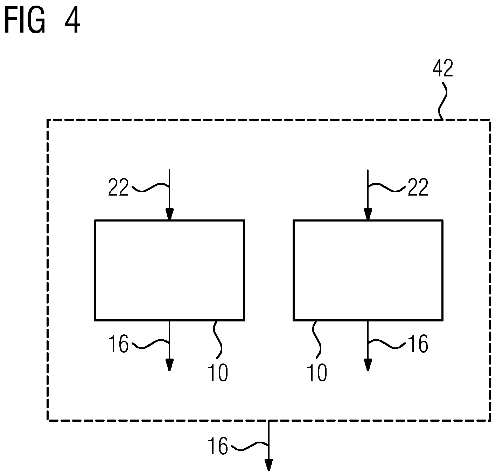

FIG 4 zeigt davon ausgehend jetzt, dass zur Überwachung von zum Beispiel redundanten Prozessoren innerhalb einer Zentraleinheit einer speicherprogrammierbaren Steuerung oder sonstiger redundanter Prozessoren/Controller von Automatisierungsgeräten mehrere dieser erweiterten Überwachungseinheiten 10 verwendet und zumindest funktional zu einem Überwachungssystem 42 zusammengefasst werden können. Dabei umfasst das so gebildete Überwachungssystem 42 für jeden zu überwachenden Prozessor eine dem jeweiligen Prozessor exklusiv zugeordnete Überwachungseinheit 10. Die Überwachungseinheiten 10 sind bezüglich ihrer Konfiguration 32, Schlüssel 20 und Laufzeit des jeweiligen Timers 12 (Überwachungszeit) voneinander unabhängig.

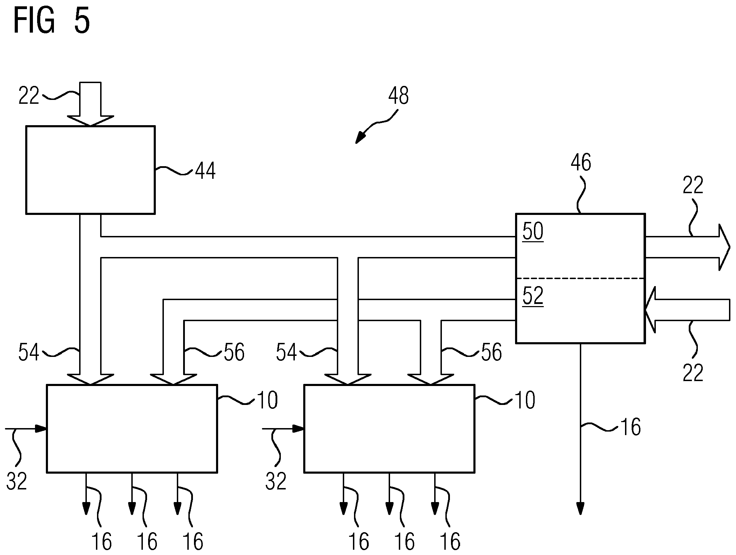

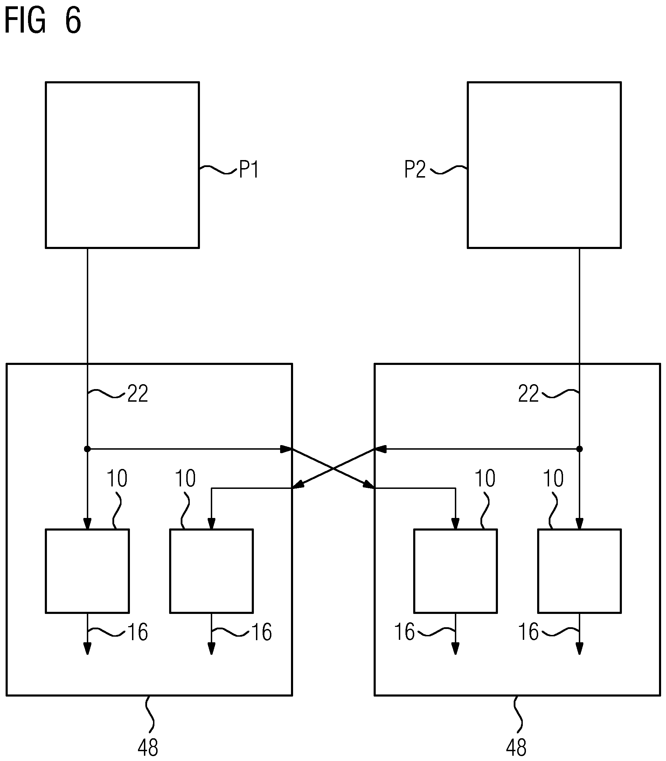

Das Überwachungssystem 42 gemäß FIG 4 ist bei einem Automatisierungsgerät mit zum Beispiel zwei Prozessoren, insbesondere redundanten Prozessoren einsetzbar und wird dafür in das jeweilige Gerät integriert, um die Überwachung der Prozessoren zu realisieren. Davon ausgehend kann die Überwachung erweitert und gewissermaßen verschränkt werden, wie dies in den Darstellungen in FIG 5 und FIG 6 gezeigt ist.

FIG 5 zeigt dazu, dass jedes Überwachungssystem 42 (FIG 4) um ein eingangsseitiges Interface 44 sowie eine Kopplungseinheit 46 erweitert ist. Das so erweiterte Überwachungssystem wird als Prozessorüberwachung 48 bezeichnet und umfasst zumindest zwei, hier genau zwei erweiterte Überwachungseinheiten 10, gemäß der Darstellung in FIG 2 und FIG 3 und der zugehörigen Beschreibung. Die Prozessorüberwachung 48 ist eine Vorrichtung zur Prozessorüberwachung, also eine Prozessorüberwachungsvorrichtung. In der nachfolgenden Beschreibung wird dennoch normalerweise der kürzere Begriff Prozessorüberwachung 48 verwendet und damit ist einerseits die entsprechende Vorrichtung, aber auch die resultierende Funktionalität gemeint.

Die Kopplungseinheit 46 der Prozessorüberwachung 48 umfasst einen im Folgenden auch kurz als Sender 50 bezeichneten Sendeteil und einen im Folgenden entsprechend mitunter kurz als Empfänger 52 bezeichneten Empfangsteil. Der Sender 50 erkennt jeden Zugriff, der zur Triggerung auf eine der zumindest zwei erweiterten Überwachungseinheiten 10 durchgeführt wird, und leitet diesen Zugriff über ein geeignetes Interface an den Empfänger 52 der Kopplungseinheit 46 einer redundanten Prozessorüberwachung 48. Der dortige Empfänger 52 gibt diesen Zugriff an die dortigen erweiterten Überwachungseinheiten 10 weiter.

Jeder Zugriff auf die Prozessorüberwachung 48 zur Triggerung wird also auch an die oder jede redundante Prozessorüberwachung 48 weitergeleitet, d.h. dupliziert oder gespiegelt. Die Kopplungseinheit 46 kann entsprechend auch als Spiegelungseinheit aufgefasst werden. Aus Sicht einer erweiterten Überwachungseinheit 10 mit ihren zwei Zugriffsmöglichkeiten kann man nun einerseits von einem lokalem Zugriff 54 und andererseits von einem gespiegeltem Zugriff 56 als Quelle des Triggers 22, oder vereinfacht von einem lokalen bzw. gespiegelten Trigger 22, sprechen, je nachdem über welchen Weg auf die erweiterte Überwachungseinheit 10 zugegriffen wird.

FIG 6 zeigt dies in einer schematisch vereinfachten Darstellung, welche die in FIG 5 dargestellte Prozessorüberwachung 48 und eine in FIG 5 nicht dargestellte, redundante Prozessorüberwachung 48 umfasst. Dabei sind Sender 50 und Empfänger 52 der in FIG 6 nicht gezeigten Kopplungseinheiten 46 (vgl. FIG 5) der redundanten Prozessorüberwachungen 48 kreuzweise miteinander verbunden (verschränkt) und so ist die Kopplung der Prozessorüberwachungen 48 hergestellt. Zwei überwachte, zum Beispiel redundante Prozessoren sind symbolisch mit P1 und P2 bezeichnet. Anstelle der Situation gemäß FIG 6 mit genau zwei redundanten oder nicht redundanten Prozessoren P1, P2 können auch mehr als zwei Prozessoren überwacht werden, zum Beispiel drei Prozessoren, fünf Prozessoren, zehn Prozessoren oder einhundert Prozessoren und so weiter. Für die Überwachung jeder beliebigen Anzahl von Prozessoren reichen zwei redundante und sich gegenseitig überwachende Prozessorüberwachungen 48 aus. Bei mehr als zwei überwachten Prozessoren umfasst jede Prozessorüberwachung genau so viele Überwachungseinheiten 10, wie Prozessoren überwacht werden. Die überwachten Prozessoren können redundant arbeiten, müssen aber nicht redundant arbeiten und bei mehr als zwei Prozessoren können einzelne Prozessoren redundant arbeiten während andere Prozessoren nicht redundant arbeiten.

Beim Betrieb der Prozessorüberwachungen 48 ist zur Nutzung der davon umfassten Überwachungseinheiten 10 vorgesehen, dass jeder Prozessor P1, P2 nur genau einmal triggert, d.h. genau einen Zugriff auf nur eine der redundanten Prozessorüberwachungen 48 zur Triggerung der redundanten, erweiterten Überwachungseinheiten 10 durchführt. Dieser Zugriff wird dazu über die Kopplungseinheiten 46 auch auf die jeweils andere, redundante Prozessorüberwachung 48 gespiegelt.

Für die Konfiguration der erweiterten Überwachungseinheiten 10 ist Folgendes vorgesehen: In jeder Prozessorüberwachung 48 wird eine der Überwachungseinheiten 10 so eingestellt, dass sie nur von genau einem der beiden Prozessoren, zum Beispiel P1, getriggert werden kann, und die andere Überwachungseinheit 10 so eingestellt, dass sie nur von dem anderen, insbesondere redundanten Prozessor P2 (über die redundante Prozessorüberwachung 48 und die verschränkten Sende- und Empfangsteile 50, 52 der Kopplungseinheiten 46) getriggert werden kann. Jeder Prozessor P1, P2 triggert demnach über die von diesem dafür umfasste Soft- oder Firmware mit nur einem Zugriff auf die ihm jeweils zugeordnete Prozessorüberwachung 48 in jeder Prozessorüberwachung 48 jeweils eine der Überwachungseinheiten 10.

Bei der Spiegelung der Zugriffe von einer Prozessorüberwachung 48 auf die andere, redundante Prozessorüberwachung 48 wird ein wesentlicher Teil der Schaltung der lokalen und der redundanten Prozessorüberwachung 48 verwendet und damit implizit getestet und überwacht. Liegt ein grundsätzliches Problem im Bereich einer Prozessorüberwachung 48 vor, so dass dort gegebenenfalls keine korrekte Überwachung mehr gewährleistet ist, würde dies durch die redundante Prozessorüberwachung 48 indirekt erkannt und signalisiert. Dies gilt wechselseitig und entfaltet damit eine vollständige Wirkung.

Bei beispielhaft zwei Prozessoren P1, P2 und zwei mal zwei zugehörigen Überwachungseinheiten 10 werden diese Überwachungseinheiten 10 also auf jeweils unterschiedliche Quellen P1, P2 konfiguriert und quasi über Kreuz getriggert. FIG 6 zeigt das grundsätzliche Schema (vereinfacht für Triggersignale 22 von zwei Prozessoren P1, P2 sowie zwei zugehörige erweiterte Überwachungseinheiten 10).

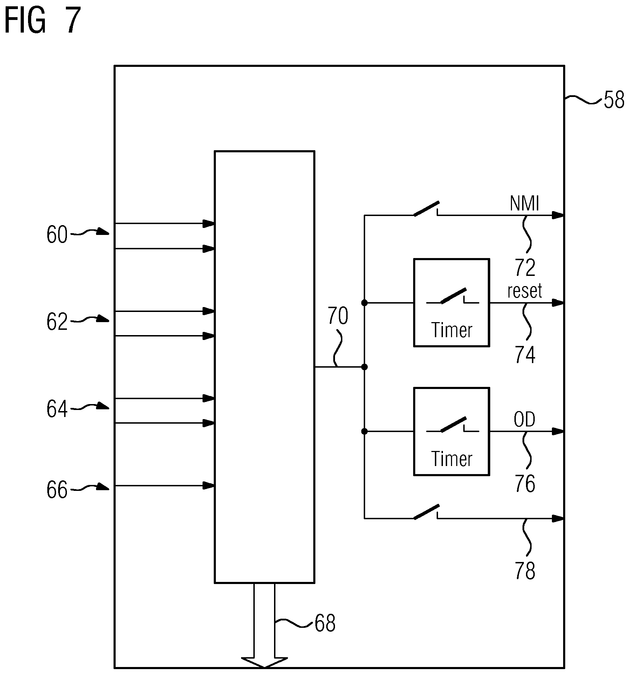

FIG 7 zeigt eine im Folgenden kurz als Signalisierungseinheit 58 bezeichnete Fehlerstatus- und weiterführende Signalisierungseinheit, die als Ergänzung einer Prozessorüberwachung 48 in Betracht kommt. Die Signalisierungseinheit 58 bündelt die signalisierten Fehler einer Prozessorüberwachung 48 und meldet diese weiter, zum Beispiel zurück an den jeweiligen Prozessor P1, P2 oder an den anderen, insbesondere redundanten Prozessor P1, P2 oder an die die Prozessoren umfassende Zentraleinheit oder an den Prozess und so weiter. Eingangsseitig erhält die Signalisierungseinheit 58 von jeder Prozessorüberwachung 48 dort eventuell generierte Fehlersignale 16. Dies ist in FIG 7 mit den Bezugsziffern 60, 62 und 64 bezeichnet und korrespondiert mit den drei Arten von Fehlersignalen 16, die in FIG 2 und FIG 5 gezeigt sind, wobei bei einer Überwachungseinheit 10, die einen Maximum-Timer 12 und einen Minimum-Timer umfasst, für beide Timer ein Fehlersignal 16 oder für jeden Timer unterschiedliche Fehlersignale 16 verarbeitet werden können. Mit der Bezugsziffer 66 ist bezeichnet, dass die Signalisierungseinheit 58 auch ein eventuell von der Kopplungseinheit 46 generiertes Fehlersignal 16 (FIG 5) erhält. Die jeweils erhaltenen Fehlersignale 16 werden ausgewertet und es werden ein Fehlerstatus 68 und ein Summenfehlersignal 70 generiert. Das Summenfehlersignal 70 wird für die Generierung eines Signals für einen nicht maskierbaren Interrupt 72 (NMI) bei allen überwachten Prozessoren, zur Generierung eines gegebenenfalls zeitverzögerten Reset-Signals 74 bei allen überwachten Prozessoren oder für die jeweilige Zentraleinheit insgesamt, zur Generierung eines gegebenenfalls zeitverzögerten OD-Signals (output disable) 76 bei allen Schnittstellen-Controllern und zur Generierung eines Fehlersignals 78 zur Ausgabe an die Synchronisationsschnittstelle verwendet.

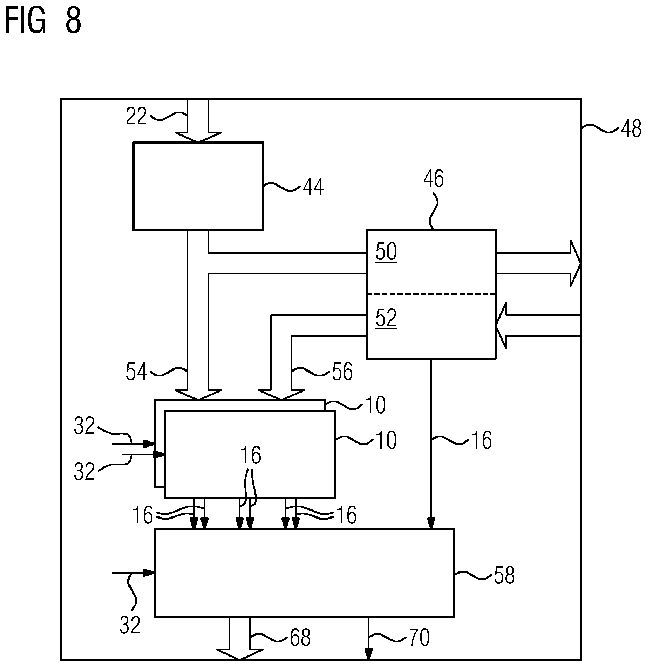

FIG 8 zeigt damit nun die Prozessorüberwachung 48 mit allen ihren einzelnen Funktionen.

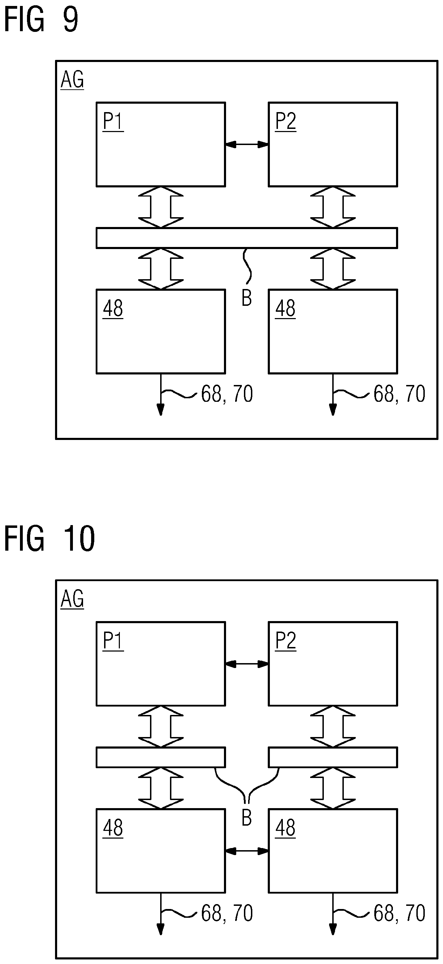

FIG 9 zeigt jeweils zwei redundante Prozessorüberwachungen 48, die mit ihrem Bus-Interface 44 (FIG 8) an einen Bus B angeschlossen sind, und zwar beide Prozessorüberwachungen 48 an denselben Bus B (zum Beispiel einen sogenannten PCI-Bus). Der Bus B, an den die beiden Prozessorüberwachungen 48 angeschlossen sind, ist dabei auch der Bus B, an den die Prozessoren P1, P2 angeschlossen sind. Das die beiden Prozessoren P1, P2 und die beiden Prozessorüberwachungen 48 umfassende Automatisierungsgerät, also zum Beispiel eine Zentraleinheit der weiter oben genannten Art, ist symbolisch mit AG bezeichnet.

FIG 10 zeigt, dass alternativ bei zum Beispiel zwei Prozessoren P1, P2 auch eine Prozessorüberwachung 48 über einen lokalen Bus B an den einen Prozessor P1 angeschlossen und die andere Prozessorüberwachung 48 wiederum lokal über einen weiteren Bus B an den anderen Prozessor P2 angeschlossen werden kann. Der große Vorteil dieser Flexibilität besteht darin, dass noch nicht einmal ein gemeinsamer Bus zwischen den Prozessoren P1, P2 vorhanden sein muss, um eine so hochwertige und redundante Überwachung mit den beiden Prozessorüberwachungen 48 realisieren zu können.

Nachfolgend werden einzelne realisierungsspezifische Aspekte im Hinblick auf Ausführungsformen der Prozessorüberwachung 48 oder davon umfasster Funktionseinheiten erörtert:

Wenn die Prozessorüberwachung 48 und/oder die davon umfassten Überwachungseinheiten 10 usw. für ihre Funktion ein Taktsignal benötigt bzw. benötigen, dann ist der Takt jeder Prozessorüberwachung 48 und/oder der davon umfassten Überwachungseinheiten 10 usw. unabhängig vom Takt der zu überwachenden Prozessoren P1, P2 und vom Takt der redundanten Prozessorüberwachung 48.

Zur Absicherung der Funktion der Prozessorüberwachungen 48 kann vorgesehen sein, dass die Konfiguration (also der Zugriff auf zur Konfiguration bestimmte KonfigurationsRegister) vor Fehlzugriffen geschützt ist, z.B. durch einen eigenen Schlüsselmechanismus.

Jede Überwachungseinheit 10 kann individuell ein- / ausgeschaltet werden (z.B. über ein Bit in einem entsprechenden Konfigurationsregister), ebenso kann die Überwachungseinheit 10 zurückgesetzt werden (Start wieder mit bestimmtem Schlüssel 20) und der Timer 12 eingestellt werden (z.B. in ms-Schritten von 1 bis 64ms). Dadurch kann eine generische Überwachung der Prozessoren und entsprechende Prozessorüberwachungen 48 für unterschiedliche Ausführungsformen des jeweiligen Automatisierungsgeräts, zum Beispiel eine Zentraleinheit mit zwei Prozessoren oder eine Zentraleinheit mit drei oder mehr Prozessoren, genutzt werden. Außerdem könnten die Prozessorüberwachung 48 oder einzelne Überwachungseinheiten 10 nur in bestimmten, besonders kritischen Betriebszuständen eingeschaltet werden oder die Zeit-Bedingung verschärft werden. Das Zu- oder Abschalten einer Prozessorüberwachung 48 kann dabei durch Aktivieren oder Deaktivieren der Fehlersignalisierung innerhalb oder vor der Signalisierungseinheit 58 realisiert werden. Zum Beispiel für Debugzwecke ist es sinnvoll, den aktuellen Zustand einer Überwachungseinheit 10 abfragen zu können (aktueller Schlüssel 20, abgelaufene Zeit, etc.), so dass bei besonderen Ausführungsformen einer Prozessorüberwachung 48 dafür entsprechende Vorkehrungen getroffen sind.

Die Spiegelung der Triggerung (Zugriffe) über die Kopplungseinheit 46 kann auf unterschiedliche Weise erfolgen, insbesondere über ein paralleles oder serielles Interface. Der Vorteil eines seriellen Interfaces besteht dabei in der geringeren Anzahl benötigter Pins und Leitungen. Vorteil eines parallelen Interfaces besteht darin, dass für die Übertragung weniger Zeit benötigt wird und dass insgesamt weniger Schaltlogik erforderlich ist. Darüber hinaus kann die Übertragung synchron oder asynchron erfolgen. Eine asynchrone Übertragung ist normalerweise nur bei einem parallelen Interface sinnvoll. Der Vorteil einer asynchronen Übertragung besteht in der einfacheren Implementierbarkeit. Der Vorteil einer synchronen Übertragung besteht in einem aus einer hier möglichen Taktüberwachung (siehe unten) resultierenden Mehrwert für die Überwachung insgesamt und der gegebenenfalls sichereren Übertragung. Bei synchroner Übertragung kommt noch in Betracht, zur Energieeinsparung den Takt nur während einer Übertragung zu aktivieren.

Zur Verbesserung der gegenseitigen Überwachung der Prozessorüberwachungen 48 kann es sinnvoll sein, den Takt nicht nur während der Übertragung, sondern dauerhaft zu aktivieren. Dann kann additiv mit Hilfe einer allgemein bekannten Zähler-Vergleicher-Schaltung eine dauerhafte und wiederum wechselseitige Überwachung der Takte der redundanten Prozessorüberwachungen 48 realisiert werden und die Qualität der Überwachung insgesamt weiter gesteigert werden. Die Fehler-Signalisierung dieser expliziten Taktüberwachung kann an die vorhandene Signalisierungseinheit 58 angebunden werden.

Zur Ergänzung einer gegenseitigen Überwachung der Takte der redundanten Prozessorüberwachungen 48 kommt noch in Betracht, auch z.B. die Takte der Busse von/zur Prozessorüberwachung 48 zu überwachen und Fehler zu signalisieren und diese zusätzliche Taktüberwachung an die Signalisierungseinheit 58 anzubinden. Der Takt / die Takte würden wiederum redundant überwacht und die Fehleraufdeckung und Lokalisierung und damit die Verfügbarkeit des Gesamtsystems verbessert.

Allen Varianten gemein ist, dass neben einer Signalisierung des Zugriffs eine (Teil-)Adresse zur Zuordnung des Zugriffs und ein Datum (Trigger, Key) übertragen werden müssen. Da die Takte der redundanten Prozessorüberwachungen 48 und damit die Takte der jeweiligen Kopplungseinheiten 46 unabhängig sind, muss die Übertragung eines Zugriffs z.B. im jeweiligen Empfänger 52 synchronisiert werden oder es wird ein anderes geeignetes (bekanntes) Verfahren angewendet. Treten bei der Übertragung über die Kopplungseinheiten 46 der Prozessorüberwachungen 48 Fehler auf, werden diese in jedem Fall erkannt und als Fehl-Triggerung gemeldet (entweder als Timeout wegen ausbleibender Triggerung oder als Fehl-Triggerung einer anderen Einheit). Eine eigene Sicherung der Übertragung gegen Übertragungsfehler ist darum nicht notwendig und kann entfallen. Dies stellt einen besonderen Vorteil dar. Optional kann eine solche Sicherung hinzugefügt werden, um zum Beispiel die Ursache einer Fehl-Triggerung unterscheiden zu können.

Die einzelnen von den Überwachungseinheiten 10 und der Kopplungseinheit 46 gemeldeten Fehler 16 werden zentral gesammelt und weiter verarbeitet (FIG 7). Im Fehlerstatus 68 werden alle Fehlersignale 16 gebündelt und können zur einfachen Diagnose im Fehlerfall gelesen werden (jedes Signal). Darüber hinaus werden die signalisierten Fehler verknüpft, zum Beispiel in Form einer logischen ODER-Verknüpfung, und das Ergebnis ist ein Summenfehlersignal 70. Liegt ein (Summen-) Fehler vor, löst dies, z.B. jeweils ein-/ausschaltbar, einzelne oder mehrere Aktionen aus, zum Beispiel mindestens eine der folgenden Aktionen (vgl. FIG 7):
- NMI (Non Maskable Interrupt) als Notfall-Interrupt an den/die Prozessoren des Automatisierungsgeräts, um zum Beispiel so weit möglich noch aktiv Daten für eine spätere Fehlerursachenanalyse retten zu können (z.B. Speicherabzug);
- Reset an den/die Prozessoren oder das Automatisierungsgerät, um den/die Prozessor(en) und/oder das Automatisierungsgerät in einen sicheren Zustand zu versetzen (optional einstellbar verzögert, um zum Beispiel zunächst noch die Datenrettung vornehmen zu können, zum Beispiel in Form eines Speicherabzugs);
- Aktivierung von Output-Disable (OD) an den lokalen Teil des redundanten oder parallelen Automatisierungsgeräts, um die lokale Peripherie abzuschalten und/oder in einen sicheren Zustand zu überführen (optional wiederum einstellbar verzögert);
- Signalisierung an diejenige Einheit (zum Beispiel Synchronisations-Schnittstellen-Controller) des Prozessors, die den anderen, insbesondere redundanten Prozessor aktiv über den Ausfall des Prozessors informiert, damit dieser den Prozess übernimmt und alleine weiterführt, wobei im Falle mehrerer Einheiten (Schnittstellen) der Fehler optional an alle Einheiten signalisiert wird, um eine redundante Information an den oder jeden anderen, insbesondere redundanten Prozessor zu realisieren.

In einer noch universelleren, aber auch aufwendigeren Variante kann auch für jedes Fehlersignal 16 einzeln die weiterführende Signalisierung durchgeführt werden.

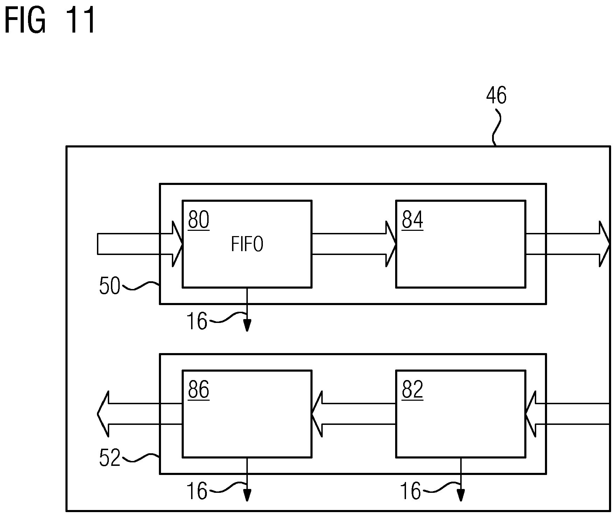

Bei einer synchronen Kopplung und Übertragung können unter Umständen die Zugriffe nicht so schnell übertragen werden wie sie erfolgen. FIG 11 zeigt dazu, dass bei einer besonderen Ausführungsform der Kopplungseinheit 46 in deren Sender 50 ein FIFO-Register 80 vorgesehen ist, das einen Zugriff-Schwall abfedert und die Übertragung transparent zurückstaut. Ein FIFO-Register 80 ist möglich, da eine kurze Verzögerung der Spiegelung tolerierbar ist (wenige µs Verzögerung sind bei Trigger-Zyklen von zum Beispiel wenigen Millisekunden absolut problemlos). Die Tiefe des FIFO-Registers 80 muss auf die mögliche Trigger-Schwall-Situation abgestimmt sein.
Wird zu häufig getriggert, kann dies auch auf einen Fehler (zum Beispiel Schleifen-Hänger im Prozessor) hinweisen. Läuft das FIFO-Register 80 dadurch über, wird das wiederum der Prozessorüberwachung 48 durch ein Fehlersignal 16 angezeigt. Dies stellt eine weitere indirekte Überwachungsfunktion dar. Um eine entsprechende Überwachung in der Qualität weiter zu verbessern, können die Überwachungseinheiten 10 dazu jeweils mit einem zweiten Timer ausgerüstet werden, der die minimale Zeit zwischen zwei Triggerungen misst und bei zu schneller Triggerung (zu kurzer Zeit zwischen zwei Triggerungen) einen Fehler signalisiert. Dieser zweite Timer kann wiederum individuell konfiguriert werden (pro Überwachungseinheit 10).

Ein weiterer Vorteil einer synchronen Übertragung ist die Möglichkeit, den dabei übertragenen Takt innerhalb des Empfängerteils 52 der Kopplungseinheit 46 ohne großen Aufwand mit zu überwachen, zum Beispiel mit einer dafür vorgesehenen Funktionseinheit (Synchronizer 82). Werden nämlich der Takt und damit auch die Daten abgetastet (einsynchronisiert), werden bei zu schneller Übertragung (in Folge zu hoher Taktrate) Daten verschluckt und können nicht mehr abgetastet werden. Dies führt zu einem Fehler durch eine ausbleibende Triggerung und wird damit (indirekt) erkannt. Außerdem kann mit einem einfachen Zähler die Dauer der Übertragung eines Zugriffs überwacht und bei zu langsamer, aber auch zu schneller Übertragung (in Folge zu niedriger bzw. zu hoher Taktrate) ein Fehler signalisiert werden.

Im Anschluss an das FIFO-Register 80 weist der Sender 50 eine Funktionseinheit zur Serialisierung des Datenstroms (Serializer 84) auf. Eine komplementäre Funktionseinheit (Deserializer 86) ist im Empfänger 52 vorgesehen.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen:
Angegeben werden eine Vorrichtung zur Prozessorüberwachung 48 mit zumindest einer ersten und einer zweiten Überwachungseinheit 10, wobei jede Überwachungseinheit 10 einen triggerbaren Zeitgeber 12 umfasst, wobei der Zeitgeber 12 mit einem Triggersignal 22 aus zumindest einer ersten oder einer zweiten Quelle triggerbar ist, und wobei das oder jedes Triggersignal 22 intern an jede Überwachungseinheit 10 der Prozessorüberwachungsvorrichtung 48 und außerdem über eine Kopplungseinheit 46 an eine weitere Vorrichtung zur Prozessorüberwachung 48 weiterleitbar ist, sowie ein Automatisierungsgerät mit zumindest zwei derartigen Vorrichtungen zur Prozessorüberwachung 48.

## Patentansprüche

1. Automatisierungsgerät mit zumindest zwei Prozessoren, wobei
- jedem Prozessor eine Prozessorüberwachungsvorrichtung (48) zugeordnet ist,
- durch jeden Prozessor ein Triggersignal (22) der ihm zugeordneten Prozessorüberwachungsvorrichtung (48) übermittelbar ist,
- die Prozessorüberwachungsvorrichtungen (48) mit zumindest einer ersten und einer zweiten Überwachungseinheit (10) und einer Kopplungseinheit (46) versehen sind,
- jede Überwachungseinheit (10) einen triggerbaren Zeitgeber (12) umfasst,
- das Triggersignal (22) innerhalb jeder Prozessorüberwachungsvorrichtung (48) konfigurierbar genau einer der von der Prozessorüberwachungsvorrichtung (48) umfassten Überwachungseinheiten (10) zur Triggerung des Zeitgebers (12) der jeweiligen Prozessorüberwachungsvorrichtung (48) zuleitbar ist,
- das Triggersignal (22) innerhalb jeder Prozessorüberwachungsvorrichtung (48) einem Sender (50) der Kopplungseinheit (46) der jeweiligen Prozessorüberwachungsvorrichtung (48) zuleitbar ist,
- ein dem Sender (50) einer der zumindest zwei Prozessorüberwachungsvorrichtungen (48) zugeleitetes Triggersignal (22) durch einen Empfänger (52) der Kopplungseinheit (46) einer anderen der zumindest zwei Prozessorüberwachungsvorrichtungen (48) empfangbar und durch diesen konfigurierbar an genau eine der von dieser Prozessorüberwachungsvorrichtung (48) umfassten Überwachungseinheiten (10) zur Triggerung des Zeitgebers (12) weiterleitbar ist.

2. Automatisierungsgerät nach Anspruch 1, wobei zumindest eine der mindestens zwei Prozessorüberwachungsvorrichtungen (48) eine Signalisierungseinheit (58) umfasst, der eine Mehrzahl innerhalb der Prozessorüberwachungsvorrichtung (48) generierbarer Fehlersignale (16) zuführbar ist, wobei durch die Signalisierungseinheit (58) anhand der Fehlersignale (16) ein durch das Automatisierungsgerät auswertbarer Summenfehler (70) generierbar ist.

3. Automatisierungsgerät nach Anspruch 2, wobei aufgrund des Summenfehlers (70) ein oder jeder Prozessor des Automatisierungsgeräts zurücksetzbar ist.

## Claims

1. Automation device having at least two processors, wherein
- a processor monitoring apparatus (48) is assigned to each processor,
- a trigger signal (22) can be transferred to the processor monitoring apparatus (48) assigned thereto by each processor,
- the processor monitoring apparatuses (48) are provided with at least a first and a second monitoring unit (10) and a coupling unit (46),
- each monitoring unit (10) comprises a triggerable timer (12),
- the trigger signal (22) within each processor monitoring apparatus (48) can be fed in a configurable manner to precisely one of the monitoring units (10) included in the processor monitoring apparatus (48), in order to trigger the timer (12) of the respective processor monitoring apparatus (48),
- the trigger signal (22) within each processor monitoring apparatus (48) can be fed to a transmitter (50) of the coupling unit (46) of the respective processor monitoring apparatus (48),
- a trigger signal (22) fed to the transmitter (50) of one of the at least two processor monitoring apparatuses (48) can be received by a receiver (52) of the coupling unit (46) of another of the at least two processor monitoring apparatuses (48) and can be forwarded by this in a configurable manner to precisely one of the monitoring units (10) included in this processor monitoring apparatus (48), in order to trigger the timer (12).

2. Automatic device according to claim 1, wherein at least one of the at least two processor monitoring apparatuses (48) comprises a signalling unit (58), to which a plurality of fault signals (16) which can be generated within the processor monitoring apparatus (48) can be supplied, wherein a checksum error (70) which can be assessed by the automation device can be generated by the signalling unit (58) on the basis of the fault signals (16).

3. Automation device according to claim 2, wherein based on the checksum error (70) one or each processor of the automation device can be reset.

## Revendications

1. Appareil d'automatisation ayant au moins deux processeurs, dans lequel
- un système (48) de contrôle de processeur est affecté à chaque processeur,
- par chaque processeur, un signal (22) de déclenchement peut être transmis au système (48) de contrôle de processeur qui lui est affecté,
- les systèmes (48) de contrôle de processeur sont pourvus d'au moins une première et une deuxième unités (10) de contrôle et d'une unité (46) de couplage,
- chaque unité (10) de contrôle comprend une horloge (12) pouvant être déclenchée,
- le signal (22) de déclenchement, configurable au sein de chaque système (48) de contrôle de processeur, peut, pour le déclenchement de l'horloge (12) du système (48) de contrôle de processeurs, être envoyé précisément à l'une des unités (10) de contrôle englobées par le système (48) de contrôle de processeur,
- le signal (22) de déclenchement peut, au sein de chaque système (48) de contrôle de processeur, être envoyé à un émetteur (50) de l'unité (46) de couplage du système (48) de contrôle de processeur,
- un signal (22) de déclenchement, envoyé à l'émetteur (50) de l'un des au moins deux systèmes (48) de contrôle de processeur, peut être reçu par un récepteur (52) de l'unité (46) de couplage d'un autre des au moins deux systèmes (48) de contrôle de processeur et en pouvant être configuré par celui-ci, être, pour le déclenchement de l'horloge (12), acheminé précisément à l'une des unités (10) de contrôle englobées par ce système (48) de contrôle de processeur.

2. Appareil d'automatisation suivant la revendication 1, dans lequel au moins l'un des au moins deux systèmes (48) de contrôle de processeur comprend une unité (58) de signalisation, à laquelle peut être envoyée une pluralité de signaux (16) d'erreur pouvant être produite au sein du système (48) de contrôle de processeur, dans lequel une erreur (70) somme, exploitable par l'appareil d'automatisation, peut être engendrée par l'unité (58) de signalisation, à l'aide des signaux (16) d'erreur.

3. Appareil d'automatisation suivant la revendication 1, dans lequel un ou chaque processeur de l'appareil d'automatisation peut être remis à l'état initial sur la base de l'erreur (70) somme.
